# EUROPEAN PATENT APPLICATION

(11) **EP 4 744 803 A1**
(43) Date of publication of application: **20.05.2026**
(21) Application number: 24383248.2
(22) Date of filing: 18.11.2024
(51) Int. Cl.: B22F 3/00, B22F 10/28, B22F 10/36, B22F 10/364, B22F 10/366, B22F 10/80, B33Y 10/00, B33Y 30/00, B33Y 50/00, B33Y 50/02, B33Y 70/00, G05B 19/4099, G06F 30/20, G06F 30/27, H01F 1/153, B22F 10/38

(54) **LASER-BASED ADDITIVE MANUFACTURING DEVICE AND METHOD FOR CRYSTALLIZATION CONTROL OF METALLIC GLASSES**

(71) Applicant: Fundación IMDEA Materiales, 28906, Getafe (Madrid) (ES)
(72) Inventor: RODRÍGUEZ SÁNCHEZ, Marcos, 28906 Getafe (ES); PÉREZ PRADO, María Teresa, 28906 Getafe (ES); BOCCARDO, Adrian Dante, 28906 Getafe (ES); TOURRET, Damien, 28906 Getafe (ES)
(74) Representative: TRBL Intellectual Property

(57) **Abstract**

The present invention relates to a novel laser powder bed fusion (LPBF) printing device, as well as a method for LPBF manufacturing of 3D objects from metallic glasses, wherein the crystalline fraction of the resulting 3D printed object can be controlled by optimizing one or more LPBF process parameters prior to printing.

## Description

### FIELD OF THE INVENTION

The present invention belongs to the technical field of additive manufacturing. More specifically, the invention relates to a laser-based additive manufacturing device and an adaptive scanning strategy for processing metallic glasses to control or avoid the creation of crystalline regions.

### BACKGROUND OF THE INVENTION

Metallic glasses (MGs) are materials with high potential of application to a wide number of fields, such as aerospace, biomedicine, precision manufacturing, communication electronics, and chemical catalysis. Their homogeneous glassy microstructure, free of crystalline defects, provides them with high strength and elasticity, hardness, and low hysteresis losses. The absence of grain boundaries also leads to excellent corrosion and wear resistance. However, a number of significant obstacles stand in the way of the extensive structural uses of MGs, including the difficulty of producing parts with large sizes and complex geometries due to their poor glass forming ability (i.e., their tendency to crystallize upon solidification), as well as their low ductility.

MGs are often produced by cooling metallic liquids sufficiently fast to avoid crystallization. This need limits the manufacturing of MGs to relatively thin geometries (wires, thin ribbons, and powders) using techniques such as vapor deposition, melt spinning, and atomization. These geometries are not suitable for structural applications. Hence, the key to the development of the MG field depends on figuring out how to overcome the size and shape constraints posed by the required high cooling rates.

Powder-based additive manufacturing (AM) methods, such as laser powder bed fusion (LPBF) (also known as selective laser melting, laser-based powder bed fusion or direct melting laser sintering), have attracted great attention from researchers to achieve free-form high-performance metallic glasses. Particularly in LPBF, a layer of metal powder is melted and solidified using a laser to create a solid layer of metal, with consecutive 2D layers being joined to preceding layers to build up a fully solid 3D part according to a 3D computer-aided design model. This layer-by-layer deposition, combined with extremely high cooling rates (approximately of 10⁵ - 10⁸ K/s), makes LPBF a viable solution to overcome the size and geometry limitations associated with metallic glasses processing.

Nonetheless, it is widely recognized that AM, and hence, LPBF, have limitations for the processing of metallic glasses. These include:
- the generation of residual stresses and internal defects, affecting the quality of the final part;
- the extension of the Heat Affected Zone (HAZ) originated in the vicinity of the processed layer to the cold layers beneath it, resulting often in undesired devitrification; and
- process parameters dependent on the shape and size of the MG part to be printed, which, despite using the same material, lead to experimentally time-consuming parameters optimizations for achieving certain mechanical properties, electromagnetic behavior, and (micro)structure (including the ratio between crystalline/amorphous fractions) in the printed part.

Crystallization control of MGs during AM has become then an important issue in this field, especially for MGs containing a ferromagnetic transition metal as the main constituent (i.e., Fe, Co, or Ni), which are highly valued for their soft magnetic properties, mechanical properties and which in general have very low glass forming ability. The present invention is aimed at solving this need in the prior art, by providing a novel method for LPBF manufacturing of three-dimensional printed objects from metallic glasses.

### BRIEF DESCRIPTION OF THE INVENTION

As discussed above, the present invention proposes an adaptive scanning strategy in the LPBF processing of metallic glasses to control the resulting crystalline fraction of the printed part by optimizing one or more LPBF process parameters prior to printing.

Hence, the present invention relates in a first aspect to an LPBF device for printing a three-dimensional (3D) object from a metallic glass comprising:
- a metallic glass powder reservoir, adapted for containing a plurality of metallic glass powder particles;
- dispensing means, connected to the metallic glass powder reservoir and adapted for depositing a plurality of consecutive layers of the metallic glass powder particles contained in the reservoir on a build platform;

- laser emission means, adapted for emitting a laser beam over the deposited consecutive layers of the metallic glass powder particles on the build platform; and
- a chamber, adapted for containing the metallic glass powder reservoir, the dispensing means, the build platform and the laser emission means, and for maintaining a controlled atmosphere during the LPBF printing of the 3D object.

Advantageously, said device further comprises a control unit, communicatively connected to the metallic glass powder reservoir, the dispensing means and the laser emission means, wherein said control unit further comprises:
- design modelling means for creating a 3D computer-aided design (CAD) model of the 3D object to be printed;
- LPBF process parameters selecting means for selecting one or more LPBF process parameters;
- laser scan path selecting means for selecting a scan path for the laser beam emitted by the laser emission means; and,
- software means adapted for simulating the LPBF printing of the 3D object with a shape and size according to the 3D CAD model defined by the design modelling means under the LPBF process parameters defined by the LPBF process parameters selecting means and following the laser scan path defined by the laser scan path selecting means, so as to adjust the LPBF process parameters to print a 3D object with a determined crystalline fraction.

In a second aspect, the invention relates to a method for LPBF printing of a 3D object from a metallic glass by means of the device herein described, wherein said method comprises performing the following steps in any technically possible order:
a) providing a metallic glass;
b) creating a 3D CAD model for the 3D object to be printed by the design modelling means;
c) defining a plurality of LPBF process parameters by the LPBF process parameters selecting means;
d) defining a laser scan path by the laser scan path selecting means;
e) setting one or more of the following metrics at which crystallization of the metallic glass provided in step a) is expected to occur: cooling rate, solidification rate, and/or incubation time, wherein incubation time is the amount of time that the metallic glass is within a temperature range limited by the crystallization temperature and the liquidous temperature of said metallic glass;
f) simulating by the software means the LPBF printing of the 3D object with a shape and size according to the 3D CAD model defined in step b) under the LPBF process parameters defined in step c) and following the laser scan path defined in step d);
g) calculating the simulated values for cooling rate, solidification rate and/or incubation time based on the local thermal profiles simulated in step f);
h) comparing the simulated values obtained in step g) with the values set in step e);
i) adjusting the LPBF process parameters defined in step c) according to the comparison performed in step h) so as to obtain a 3D printed object with a determined crystalline fraction;
j) printing the 3D object with a shape and size according to the 3D CAD model defined in step b) under the LPBF process parameters adjusted in step i) and following the laser scan path defined in step d).

In a third aspect, the invention relates to a computer program comprising instructions which, when executed in the control unit of the LPBF device herein described, enables performing either steps b) to h) or steps b) to i) of the method of the invention.

Other aspects and embodiments of the invention are described in the appended claims.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DESCRIPTION OF THE DRAWINGS

The foregoing and other features and advantages will be more fully understood from the detailed description of the invention, as well as from examples referring to the attached figures, which are described in the following paragraphs, wherein:

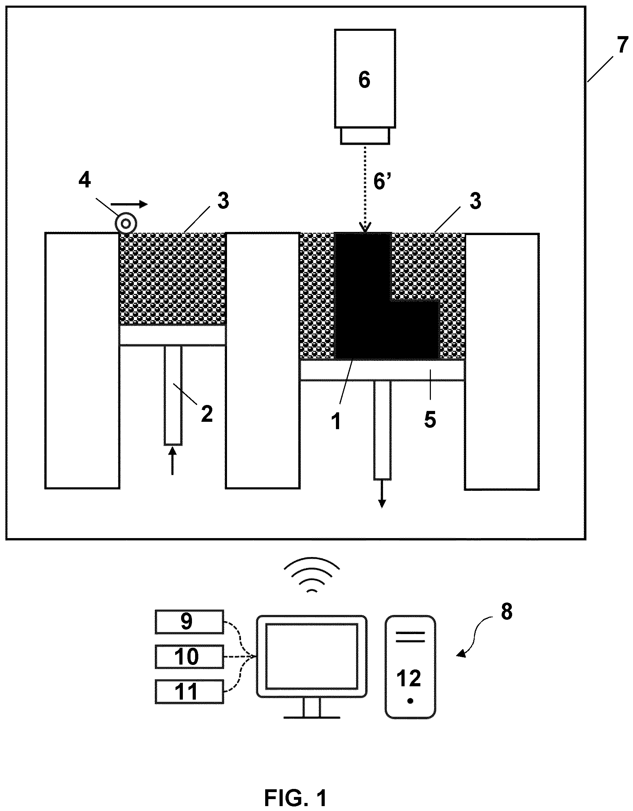

Figure 1 shows the device of the invention according to one of its preferred embodiments.

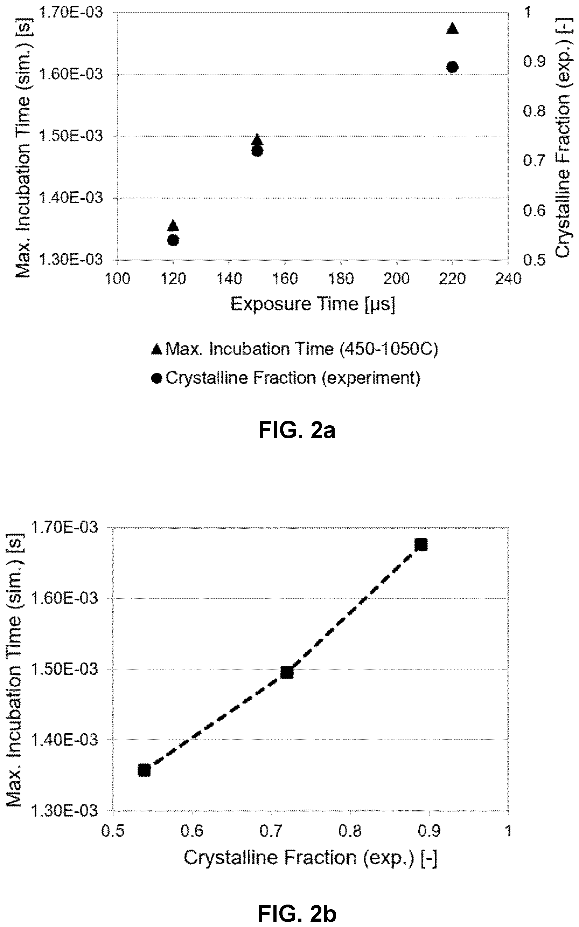

Figure 2a shows maximum incubation time and experimentally measured crystalline fraction of a metallic glass part for different laser exposure time values calculated using the method of the invention. Figure 2b shows the relationship between the simulation performed by the method of the invention and experimental results.

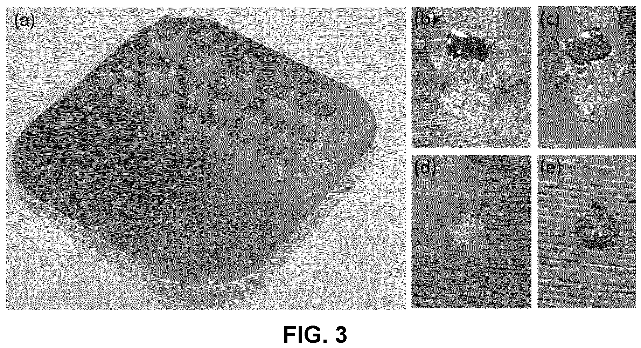

Figure 3 shows: (a) LPBF-printed cubic samples of a Fe-based metallic glass with different sizes and different jump delays assigned. (b, c) Close view of 4 mm samples printed with a jump delay of 1 ms which show severe warping (d, e) Close view of 2 mm samples printed with a jump delay of 1 ms which failed due to excessive warping during the process.

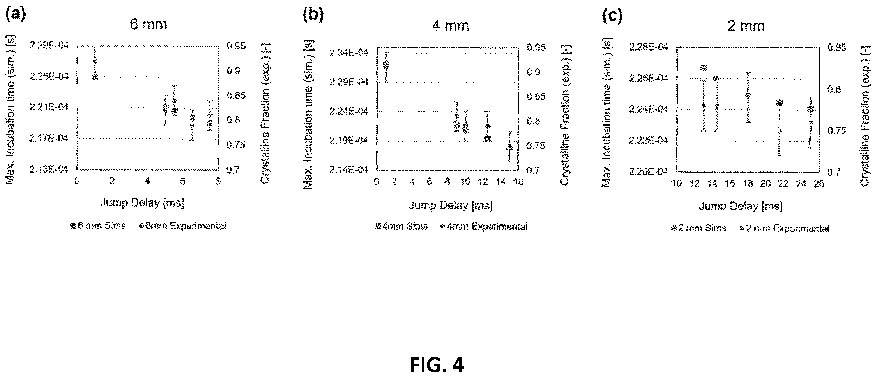

Figure 4 shows a comparison between simulated incubation time and experimentally measured crystalline fraction for samples of different sizes and increasing jump delays. The error bars correspond to the +/- 3% measurement error in crystalline fraction from the instrument used to quantify the crystalline fraction of LPBF-printed samples.

### NUMERICAL REFERENCES USED IN THE DRAWINGS

In order to provide a better understanding of the technical features of the invention, Figure 1 is accompanied by a series of numerical references which, with an illustrative and nonlimiting character, are hereby represented:

| | |
|---|---|
| 1 | 3D printed object |
| 2 | Metallic glass powder reservoir |
| 3 | Metallic glass powder particles |
| 4 | Dispensing means |
| 5 | Build platform |
| 6 | Laser emission means |
| 6' | Laser beam |
| 7 | Chamber |
| 8 | Control unit |
| 9 | Design modelling means |
| 10 | LPBF process parameters selecting means |
| 11 | Laser scan path selecting means |
| 12 | Software means |

### DETAILED DESCRIPTION OF THE INVENTION

The present invention provides a novel laser powder bed fusion (LPBF) printing device, as well as a method for LPBF manufacturing of 3D objects (1) from metallic glasses, wherein the crystalline fraction of the resulting 3D printed object (1) can be controlled by using the optimal combination of LPBF process parameters found by simulation means prior printing.

In the context of the instant invention, the terms "3D object" or "3D printed object" shall be understood as a LPBF-printed solid shape from a metallic glass that have three dimensions including length, depth and width. The terms "object" and "part" will be used interchangeably throughout this text. Likewise, the term "metallic glass" shall be understood as a material with a completely or partially disordered atomic-scale structure, wherein said material comprises either a pure metal, an alloy (i.e., a combination of two or more metallic elements), or a combination of one or more metallic elements and one or more metalloids. The term "metallic glass" comprises, without limitation, Fe-, Co-, Ni-, Zr-, Al-, Cu-, Pd-, La-, Mg-, Y-, Pt-, Ce-, Nd-, Ca-, Hf-, Sm-, Au-, Pr-, Sr-, Zn-, Al-, and Ti-based alloys. In a particular embodiment, the metallic glass is selected from Fe-, Co-, Ni-, Zr-, Al-, Cu-, Pd-, La-, Mg-, Y-, Pt-, Ce-, Nd-, Ca-, Hf-, Sm-, Au-, Pr-, Sr-, Zn-, Al-, and Ti-based alloys. Preferably, the metallic glass comprises a ferromagnetic transition metal as the main constituent, i.e., Fe-, Co-, or Ni. In particular embodiments, the metallic glass is selected from: Fe-P-B, (Fe, Co, Ni)-Si-B, (Fe, Co, Ni)-Mo-C, (Fe, Co, Ni)-Zr-B, (Fe, Co, Ni)-Hf-B, (Fe, Co, Ni)-Nb-B, Fe-Co-P-B, Fe-Co-Si-B, Fe-Si-B, Fe-Zr-B, Fe-Hf-B, Fe-Ti-B-Cu, Fe-Zr-B-Cu, Fe-Hf-B-Cu, Fe-Nb-B-Cu, Fe-Ta-B-Cu, (Fe, Co)-Nb-B-Cu, (Fe, Co)-Hf-B-Cu, (Fe, Co)-Zr-B-Cu, Fe-(Nb, Cr, Mo)-(Al, Ga)-(P, B, C), Fe-Co-(Zr, Hf, Nb)-(Mo, W)-B, Fe-Co-Nd-Dy-B, Fe-Co-Ga-(P, C, B), Fe-(Co, Cr, Mo, Ga)-(P, C, B), Fe-Ni-P-B, Fe-B-Si-(Zr, Nb), Fe-(Co, Cr, Mo, Ga, Sb)-C-B-P, Fe-Ni-P-B, or any combination thereof. More preferably, the metallic glass comprises a Fe-based alloy. In a particular embodiment of the invention, the metallic glass is Fe_{73.7}B₁₁Si₁₁Cr_{2.3}C₂ [atomic, at., %].

A preferred embodiment of the device of the invention is schematically represented in Figure 1. Said device shares the following elements with a known LPBF device:
- a metallic glass powder reservoir (2), adapted for storing a plurality of metallic glass powder particles (3).
- dispensing means (4), connected to the metallic glass powder reservoir (2) and adapted for depositing a plurality of consecutive layers of the metallic glass powder particles (3) contained in the reservoir (2) on a build platform (5).
- laser emission means (6), adapted for emitting a laser beam (6') over the deposited consecutive layers of the metallic glass powder particles (3) on the build platform (5).
- a chamber (7), adapted for containing the metallic glass powder reservoir (2), the dispensing means (4), the build platform (5) and the laser emission means (6), and for maintaining a controlled atmosphere during the printing process of the 3D object (1).

In the context of the instant invention, the term "reservoir" shall be understood as a hollow object used for storing a metallic glass powder. In different embodiments of the device of the invention, the metallic glass powder reservoir (2) can be, for instance, a hopper or a silo. Preferably, the metallic glass powder reservoir includes a piston or an embolus to push said particles towards the dispensing means (4).

Likewise, the expression "controlled atmosphere" shall be understood as a gas or mixture of gases whose composition is such that minimizes the risk of metallic glass surface oxidation during the LPBF printing process. Preferably, said controlled atmosphere comprises vacuum, nitrogen, argon, hydrogen or any combination thereof. However, other gas or inert gases able to minimize the risk of material oxidation during the LPBF printing process can also be employed in the context of the invention.

In different embodiments of the device of the invention, the dispensing means (4) comprises a rubber, metal or ceramic wiper, a blade, a roller or a re-coater.

In different embodiments of the invention, the laser emission means (6) comprises one or more ytterbium fiber lasers (λ = 1070-1080 nm), or one or more gallium nitride-based diode lasers (λ = 360-521 nm). Under the scope of the present invention, the term "ytterbium fiber laser" shall be understood as a type of laser where the gain medium is a host material doped with ytterbium (Yb³⁺) ions. Likewise, the term "gallium nitride-based diode laser" refers to a type of semiconductor laser that utilizes gallium nitride (GaN) as the active medium to produce coherent light in the visible light spectrum. In a particular embodiment of the invention, the laser emission means (6) is a pulsed ytterbium fiber laser with a wavelength of 1075 nm.

Advantageously over the prior art LPBF devices, the device of the invention further comprises a control unit (8), communicatively connected to the metallic glass powder reservoir (2), the dispensing means (4) and the laser emission means (6), wherein said control unit (8) further comprises:
- design modelling means (9) for creating a 3D computer-aided design (CAD) model of the 3D object (1) to be printed;
- LPBF process parameters selecting means (10) for selecting one or more LPBF process parameters;
- laser scan path selecting means (11) for selecting a scan path for the laser beam (6') emitted by the laser emission means (6); and,
- software means (12) adapted for simulating the LPBF printing of the 3D object (1) with a shape and size according to the 3D CAD model created by the design modelling means (9) under the LPBF process parameters defined by the LPBF process parameters selecting means (10) and following the laser scan path defined by the laser scan path selecting means (11).

Thanks to this control unit (8), the device of the invention allows to perform LPBF process parameters optimization iterations in a simulated environment to control the crystalline fraction in the resulting 3D printed object (1), saving time, energy, material and operating costs. The simulations can give rise to different combinations of optimal LPBF process parameters depending on the dimensions and shape of the analyzed region of the 3D printed part (1).

The design modelling means (9) comprises commercially available CAD-type software. Said design modelling means (9) are selected from: AutoCAD, Autodesk Fusion, SOLIDWORKS, CATIA, Tinkercad, FreeCAD, Creo, BricsCAD, SketchUP, or Siemens NX. Nonetheless, other CAD-type software oriented to drawing and modeling in 3D can also be employed in the context of the invention.

In a second aspect, the invention relates to a method for LPBF printing of a 3D object (1) from a metallic glass by means of the device herein described. The method of the invention initially requires a selection of:
- a plurality of LPBF process parameters by means of the LPBF process parameters selecting means (10); and
- a laser scan path by means of the laser scan path selecting means (11).

Within the scope of interpretation of the present invention, the term "LPBF process parameter" refers to any measurable input element in a laser powder bed fusion process that affects the process output. Without limitation, the term "LPBF process parameter" includes any of the following parameters:
- laser power (*P*), i.e., the energy delivered by the laser beam per unit of time and per unit of area. In particular embodiments, the *P* is initially set between 20-500 W, between 30-250 W, or between 35-160 W. Preferably, the *P* is initially set between 35-65 W. In particular embodiments, the *P* is initially set at 20 W, 30 W, 35 W, 40 W, 50 W, 60 W, 65 W, 80 W, 100 W, 160 W, 250 W, or 500 W.
- laser scan speed (*v*), i.e., how fast the laser beam moves across the metallic glass powder layer. In particular embodiments, the *v* is initially set between 100-4000 mm/s, between 250-2000 mm/s, or between 300-1000 mm/s. Preferably, the *v* is initially set between 300-700 mm/s. In particular embodiments, the *v* is initially set at 100 mm/s, 250 mm/s, 300 mm/s, 350 mm/s, 500 mm/s, 650 mm/s, 900 mm/s, 1000 mm/s, 2000 mm/s, or 4000 mm/s.
- hatch distance (*h*), i.e., the length between the centre of sequential laser scan tracks during the LPBF process. In particular embodiments, the *h* is initially set between 10-100 µm, between 20-90 µm, or between 40-90 µm. Preferably, the *h* is initially set between 60-90 µm. In particular embodiments, the *h* is initially set at 10 µm, 20 µm, 30 µm, 40 µm, 50 µm, 60 µm, 80 µm, 90 µm, or 100 µm.
- powder layer thickness (*t*), i.e., how thick is the metallic glass powder material dispensed over the build platform. In particular embodiments, the *t* is initially set between 10-70 µm, between 20-60 µm, or between 25-50 µm. Preferably, the *t* is initially set between 25-50 µm. In particular embodiments, the *t* is initially set at 10 µm, 20 µm, 25 µm, 30 µm, 40 µm, 50 µm, 60 µm or 70 µm.
- laser spot size, i.e., the diameter of the laser beam measured at the exit face of the laser emission means (6). In particular embodiments, the laser spot size is initially set between 10-500 µm, between 50-150 µm, or between 60-90 µm. Preferably, the laser spot size is initially set between 60-90 µm. In particular embodiments, the laser spot size is initially set at 10 µm, 20 µm, 30 µm, 40 µm, 50 µm, 60 µm, 62 µm, 65 µm, 80 µm, 85 µm, 90 µm, 150 µm, or 500 µm.
- laser exposure time (ET), i.e., the period that the laser beam is heating a metallic glass layer dispensed by the dispensing means over the build platform. In particular embodiments, the ET is initially set between 20-1000 µs, between 50-500 µs, or between, 80-300 µs. Preferably, the ET is initially set between 100-250 µs. In particular embodiments, the ET is initially set at 20 µs, 50 µs, 80 µs, 100 µs, 120 µs, 150 µs, 220 µs, 250 µs, 500 µs, or 1000 µs.
- laser point distance (PD), i.e., the distance between two consecutive laser exposures over a metallic glass layer. In particular embodiments, the PD is initially set between 10-100 µm, or between 50-90 µm. Preferably, the PD is initially set between 50-90 µm. In particular embodiments, the PD is initially set at 10 µm, 20 µm, 30 µm, 40 µm, 50 µm, 60 µm, 70 µm, 80 µm, 90 µm, or 100 µm.
- laser duty cycle (DC), i.e., the amount of time that the laser emission means are actively emitting laser light. In particular embodiments, the DC is initially set between 70-100%, or between 90-100%. Preferably, the DC is initially set between 90-100%. In particular embodiments, the DC is initially set at 70%, 75%, 80%, 85%, 90%, 91%, 92%, 93%, 94%, 95%, 96%, 97%, 98%, 99%, or 100%.
- jump delay, i.e., time between adjacent laser scan tracks. In particular embodiments, the time between adjacent laser scan tracks is initially set between 0-1000 ms, between 1-500 ms, between 1-300 ms, or between 1-50 ms. Preferably, the jump delay is initially set between 1-30 ms. In particular embodiments, the time between adjacent laser scan tracks is initially set at 1 ms, 5 ms, 5.5 ms, 6.5 ms, 7.5 ms, 9 ms, 10 ms, 12.5 ms, 13 ms, 14.5 ms, 15 ms, 18 ms, 21.5 ms, 25 ms, 50 ms, 300 ms, 500 ms, or 1000 ms.

Within the scope of interpretation of the present invention, the term "laser scan path" will be understood as the spatial moving pattern of the laser beam over the scanning surface; i.e., the metallic glass powder layer. In a particular embodiment, the laser scan path is selected from the following scan strategies: stripes, chessboard, bi-directional, meander, double-scan, or point-random [see Zrodowski, 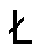 ., et al. *New approach to amorphization of alloys with low glass forming ability via selective laser melting.* J. Alloys Compd., 2019, vol. 771, p. 769-776]. Preferably, the laser scan path is meander. Under this scan strategy, neighboring vectors of the laser scan path are scanned with a constant hatching distance in the opposite direction over the entire metallic glass powder layer. In particular embodiments, the laser scan path is meander with a rotation of the laser scan direction between 0°-200°, between 60°-180°, or between 60°-90° after the deposition of a new metallic glass powder layer on the build platform (5) by the dispensing means (4). In particular embodiments, the laser scan direction is rotated 0°, 60°, 90°, or 180°. More preferably, the laser scan path is meander with a rotation of the laser scan direction between 60°-90°. In particular embodiments of the invention, the laser scan path is meander with a 67° rotation of the laser scan direction after the deposition of a new metallic glass powder layer on the build platform (5).

In addition to defining the LPBF process parameters and the laser scan path, the method of the invention initially comprises designing and modelling the 3D object (1) to be printed by means of the design modelling means (9), and then slicing the 3D CAD model in the required number of layers according to the selected powder layer thickness (t).

The next step of the method of the invention is simulating, with the software means (12), the LPBF printing process of the 3D object (1) with a shape and size according to the designed 3D CAD model under the initially selected LPBF process parameters by the LPBF process parameters selecting means (10) and following the defined laser scan path by the laser scan path selecting means (11). A coupled thermal-metallurgical model is used to simulate the process.

The thermal part of the model computes the evolution of temperature in the 3D printed part (1) while a moving surface or volumetric heat source, which simulates the laser beam (6'), scans the surface of the 3D printed part's cross section at a given layer of the LPBF printing. Said heat source is defined considering laser power, laser scan speed, laser exposure time, laser point distance, laser spot size, laser scan path, and material properties. The main objective of the temperature calculation is to estimate the melt pool dimensions (i.e., the dimensions of the region of molten metallic glass in proximity to the laser/material interface) and to simulate the thermal profile in the Heat Affected Zone (HAZ; i.e., the area of the 3D printed object (1) that has not been melted and has undergone changes in properties as a result of being exposed to relatively high temperatures). The classical heat transfer equation is used, wherein physical properties of the metallic glass, such as density, absorptivity, specific heat capacity, latent heat, and conductivity, are considered. The heat source term considers laser and phase change contributions. Newton's law boundary condition is imposed to link the 3D part (1) with the build platform (5), the surrounding powder particles (3) and the chamber's (7) atmosphere.

The metallurgical part of the model accounts for the transformation of the metallic glass from solid to liquid phases, and then from liquid to solid. During the solid to liquid transformation, the solid phase may have either the physical properties corresponding to those of the metallic glass powder, to simulate the melting of powder particles, or the properties corresponding to a bulk metallic glass, to simulate the remelting of a previously solidified track or layer. In the context of the present invention, the term "bulk metallic glass" shall be understood as a non-particulate solid metallic glass material preferably comprising a single consolidated layer or a stack of consolidated layers. Moreover, this part of the model determines the crystallization of the metallic glass after repeated thermal cycles. The crystallization criterion is based on a combination of one or more of the following metrics:
- cooling rate, i.e., the speed at which the metallic glass decreases in temperature following a laser exposure;
- solidification rate, i.e., the rate at which the melt pool will solidify; and/or
- incubation time, i.e., the amount of time that each point of the metallic glass is within a temperature range limited by the crystallization temperature (Tₓ) and the liquidous temperature (Tₗ) of said metallic glass. Within the scope of the present invention the term "crystallization temperature" shall be interpreted as the temperature at which the solid amorphous structure of the metallic glass begins to transition into a crystalline phase upon heating. Likewise, the term "liquidous temperature" shall be understood as the temperature above which the material is fully molten and exists entirely in the liquid phase.

The critical value for these metrics (at which crystallization is expected to occur) is set depending on the phase change diagram of the metallic glass as well as based on an experimental calibration consisting of experimental measurements of the crystalline fractions, melt pool and HAZ dimensions from 3D parts (1) printed with different LPBF processing parameter combinations.

The heat transfer and phase transformation equations are solved in the whole 3D part (1) by using analytical solutions and/or numerical methods such as finite elements, finite difference, finite volumes, and spectral-based methods.

Based on the results of the simulation, the initially selected LPBF process parameters are adjusted to ensure the desired crystalline fraction in the 3D printed object (1). This can be done either by the user of the device of the invention or automatically by the software means (12). In the first case, the user (or any person in charge) will evaluate the results of the simulations performed for the same 3D CAD model but with different combinations of LPBF process parameters, comparing them and choosing the combination that minimizes crystallization. In the latter case, a regression is performed by the software means (12) resulting in an optimal combination of the LPBF process parameters, whose values can even be exported in a file or printed.

In preferred embodiments of the invention, LPBF process parameters optimization is performed using a training model (local or cloud-based) according to a machine-learning (ML) or an artificial intelligence (Al) algorithm, which can also be fed and improved by the actual data obtained in a LPBF printing process using the device of the invention. In this way, the system can be further optimized in time, so as to obtain more precise LPBF process parameters. Said training model comprises a dataset that includes different combination of LPBF processing parameters according to the shape and size of the 3D part to be printed, and the resulting crystalline fraction. Among the machine learning algorithms that could be used are the following: tree-based models like Random Forests (RF) or Gradient Boosting Machines (GBM), Bayesian Optimization, genetic algorithms, multi-fidelity optimization, convolutional neural networks, fully connected neural networks or reinforcement learning. However, other ML or AI algorithm known in the state of the art can also be employed in the context of the invention.

Finally, after optimizing the initially selected LPBF process parameters according to the simulated results, the LPBF printing of the metallic glass 3D part (1) is performed. A layer of the metallic glass powder particles (3) contained in the reservoir (2) is deposited by the dispensed means (4) on the build platform (5) of the LPBF device and a laser beam (6') is emitted by the laser emission means (6) over said layer, scanning the layer following the laser scan path defined by the laser scan path selecting means (11). The layer is consequently melted and solidified with extremely high cooling rates (approximately of 10⁵ - 10⁸ K/s). Consecutive 2D layers are deposited and melted over the preceding layers to build up a fully solid 3D object (1) according to the 3D CAD design model created by the design modelling means (9).

In a third aspect, the invention relates to a computer program comprising instructions which, when executed in the control unit (8) of the LPBF device herein described, enables performing either steps b) to h) or steps b) to i) of the method of the invention.

### EXAMPLES

The following invention is hereby described by way of the following examples, which are to be construed as merely illustrative and not limitative of the scope of the invention.

### Example 1: LPBF printing of a 3D object from a Fe-based metallic glass by the method of the invention.

A Fe-based metallic glass powder with nominal composition Fe_{73.7}B₁₁Si₁₁Cr_{2.3}C₂ [at. %] was used for printing a 3D object with a conventional LPBF system equipped with a pulsed ytterbium fiber laser (λ=1075 nm). The 3D CAD model used as input geometry was an 8 x 8 x 9.5 mm cuboid. The LPBF printing process was performed following a laser scan path of meander type with a 67° rotation among subsequent layers, and selecting the LPBF process parameters described below:
- laser power (P) = 40 W;
- hatch distance (*h*) = 80 µm;
- powder layer thickness (*t*) = 30 µm;
- laser spot size = 62 µm;
- laser exposure time (ET) = 220 µs;
- laser point distance (PD) = 80 µm; and
- jump delay = 1 ms.

This combination of LPBF process parameters yielded a 3D object with a crystalline fraction of 89%.

By using the method of the invention, the simulation performed by the software means of the device of the invention indicated that, for the aforementioned combination of LPBF process parameters, the incubation time is 6·10⁻⁴ s. The model suggests that, by reducing ET to 150 µs and 120 µs, while keeping all other LPBF process parameters constant, the incubation time is reduced to 5.15·10⁻⁴ s and 4.45·10⁻⁴ s, respectively.

The experimental validation consisted of printing a 3D part with the same geometry and LPBF process parameters except for the exposure time, where the new values of 150 µs and 120 µs were applied to the LPBF system instructions. The crystalline fractions measured on the resulting parts were 70% (for ET = 150 µs) and 54% (for ET = 120 µs). Figure 2a shows the numerically calculated incubation time and the experimentally measured crystalline fraction for increasing exposure time values. Figure 2b depicts the positive relationship between the simulation metric and the experimental results.

Hence, it can be concluded that the method of the invention can be successfully used to reduce the crystalline fraction and adapt LPBF processing parameters accordingly wherein the shape and size of the 3D object to be printed is fixed.

### Example 2: Effect of 3D object's size on LPBF process parameters

Several prism-shaped 3D objects with different square cross-sections (i.e., 8x8 mm, 6x6 mm, 4x4 mm, 2x2 mm) were printed from a Fe-based metallic glass powder with nominal composition Fe_{73.7}B₁₁Si₁₁Cr_{2.3}C₂ [at. %] using a conventional LPBF system equipped with a pulsed ytterbium fiber laser (λ=1075 nm). The LPBF printing process was performed following a laser scan path of meander type with a 67° rotation among subsequent layers, and under the same LPBF process parameters, which are described below:
- laser power (P) = 60 W;
- hatch distance (*h*) = 80 µm;
- powder layer thickness (*t*) = 30 µm;
- laser spot size = 85 µm.
- laser exposure time (ET) = 150 µs; and
- laser point distance (PD) = 80 µm.

Fig. 3(a) shows a build plate with the aforementioned Fe-based metallic glass samples after LPBF processing; in particular: one prism-shaped sample of 8 mm-side, five prism-shaped samples of 6 mm-side, ten prism-shaped samples of 4 mm-side, and twelve prism-shaped samples of 2 mm-side. The 8 mm-side sample is placed in the upper left corner of the build plate, and it is visible that the prism shape is retained after processing, suggesting that the combination of LPBF process parameters applied is within the viable range of LPBF process parameters (known as "processability window"). On this sample, the jump delay was 1 ms. When the sample size is reduced to 4 mm and the jump delay is kept constant along with the rest of the LPBF process parameters, the samples warp and the corners break off, as can be seen on Fig. 3 (b, c). Furthermore, the effect is more severe when the sample size is reduced to 2 mm, as depicted in Fig. 3 (d, e), where the samples failed during the printing process due to excessive warping. Further LPBF printings were performed varying the jump delay, while the above-mentioned LPBF process parameters were kept constant. Increasingly large jump delay values were given for samples with decreasing sizes in order to compensate for the heat accumulation. Specifically:
- 6 mm-side samples were assigned jump delays of 5 ms, 5.5 ms, 6.5 ms, 7.5 ms;
- 4 mm-side samples were assigned jump delays of 9, 10, 12.5, 15 ms; and
- 2mm-side samples were assigned jump delays of 13, 14.5, 18, 21.5 and 25 ms.

2mm- and 4 mm- side samples with higher jump delay values successfully retained their shape during the printing process. It becomes clear that smaller samples need an adjustment of LPBF process parameters, particularly the jump delay.

The numerical model of the method of the invention was used to calculate an incubation time which can be closely related to the crystalline fraction of printed samples. Fig. 4 presents the simulated incubation time (squares) for each sample size with respect to the jump delay values that were applied in the LPBF experiment. On each sample size plot, the measured crystalline fractions (circles) of printed samples are plotted with respect to the applied jump delays. The error bars represent the measurement error associated with the instrument used to quantify the crystalline fractions of printed specimens. The simulation results (labeled as 'sims') show a very close agreement with the experiments, being within the experimental error in all cases for samples in the 6- and 4-mm groups (Fig. 4 (a, b)), and in most cases for samples in the 2 mm group (Fig. 4(c)).

Therefore, the method of the invention has proven to be effective to adjust a LPBF process parameter that closely matches the degree of crystallization in LPBF-processed metallic glass parts of different geometries.

## Claims

1. A laser-based powder bed fusion (LPBF) device for printing a three-dimensional (3D) object (1) from a metallic glass comprising:
- a metallic glass powder reservoir (2), adapted for containing a plurality of metallic glass powder particles (3);
- dispensing means (4), connected to the metallic glass powder reservoir (2) and adapted for depositing a plurality of consecutive layers of the metallic glass powder particles (3) contained in the reservoir (2) on a build platform (5);
- laser emission means (6), adapted for emitting a laser beam (6') over the deposited consecutive layers of the metallic glass powder particles (3) on the build platform (5);
- a chamber (7), adapted for containing the metallic glass powder reservoir (2), the dispensing means (4), the build platform (5) and the laser emission means (6), and for maintaining a controlled atmosphere during the LPBF printing of the 3D object (1);
and **characterized in that** said device further comprises a control unit (8), communicatively connected to the metallic glass powder reservoir (2), the dispensing means (4) and the laser emission means (6), wherein said control unit (8) further comprises:
- design modelling means (9) for creating a 3D computer-aided design (CAD) model of the 3D object (1) to be printed;
- LPBF process parameters selecting means (10) for selecting one or more LPBF process parameters;
- laser scan path selecting means (11) for selecting a scan path for the laser beam (6') emitted by the laser emission means (6); and,
- software means (12) adapted for simulating the LPBF printing of the 3D object with a shape and size according to the 3D CAD model created by the design modelling means (9) under the LPBF process parameters defined by the LPBF process parameters selecting means (10) and following the laser scan path defined by the laser scan path selecting means (11), so as to adjust the LPBF process parameters to print a 3D object (1) with a determined crystalline fraction.

2. A method for LPBF printing a 3D object (1) from a metallic glass by means of the device according to claim 1, **characterized in that** said method comprises performing the following steps in any technically possible order:
a) providing a metallic glass;
b) creating a 3D CAD model of the 3D object (1) to be printed by the design modelling means (9);
c) defining a plurality of LPBF process parameters by the LPBF process parameters selecting means (10);
d) defining a laser scan path by the laser scan path selecting means (11);
e) setting one or more of the following metrics at which crystallization of the metallic glass provided in step a) is expected to occur: cooling rate, solidification rate, and/or incubation time, wherein incubation time is the amount of time that the metallic glass is within a temperature range limited by the crystallization temperature and the liquidous temperature of said metallic glass;
f) simulating by the software means (12) the LPBF printing of the 3D object (1) with a shape and size according to the 3D CAD model defined in step b) under the LPBF parameters defined in step c) and following the laser scan path defined in step d);
g) calculating the simulated values for cooling rate, solidification rate and/or incubation time based on the local thermal profiles simulated in step f);
h) comparing the simulated values obtained in step g) with the values set in step e);
i) adjusting the LPBF process parameters defined in step c) according to the comparison performed in step h) so as to obtain a 3D printed object (1) with a determined crystalline fraction;
j) printing the 3D object (1) with a shape and size according to the 3D CAD model defined in step b) under the LPBF parameters adjusted in step i) and following the laser scan path defined in step d).

3. The method according to claim 2, wherein step a) comprises providing a metallic glass in powder-form.

4. The method according to any of claims 2 or 3, wherein the metallic glass comprises a ferromagnetic transition metal-based alloy.

5. The method according to claim 4, wherein the metallic glass comprises a Fe-based alloy.

6. The method according to any of claims 2 to 5, wherein step c) comprises defining one or more of the following LPBF process parameters: laser power, laser scan speed, hatch distance, powder layer thickness, laser spot size, laser exposure time, laser point distance, laser duty cycle, and/or time between adjacent laser scan tracks.

7. The method according to claim 6, wherein step c) comprises defining the following LPBF process parameters: laser power, hatch distance, powder layer thickness, laser spot size, laser exposure time, laser point distance, and time between adjacent laser scan tracks.

8. The method according to claim 6, wherein step c) comprises defining:
- a laser power between 20 and 500 W; and/or
- a laser scan speed between 100 and 4000 mm/s; and/or
- a hatch distance between 10 and 100 µm; and/or
- a powder layer thickness between 10 and 70 µm; and/or
- a laser spot size between 10 and 500 µm; and/or
- a laser exposure time between 20-1000 µs; and/or
- a laser point distance between 10 and 100 µm; and/or
- a laser duty cycle between 70-100%; and/or
- a time between adjacent laser scan tracks between 0-1000 ms.

9. The method according to claim 7, wherein step c) comprises defining:
- a laser power between 35 and 65 W; and/or
- a laser scan speed between 300 and 700 mm/s; and/or
- a hatch distance between 60 and 90 µm; and/or
- a powder layer thickness between 25 and 50 µm; and/or
- a laser spot size between 60 and 90 µm; and/or
- a laser exposure time between 100-250 µs; and/or
- a laser point distance between 50 and 90 µm; and/or
- a laser duty cycle between 90-100%; and/or
- a time between adjacent laser scan tracks between 1-30 ms.

10. The method according to any of claims 2 to 9, wherein step d) comprises defining a laser scan path according to any of the following scan strategies: stripes, chessboard, bi-directional, meander, double-scan, or point-random.

11. The method according to claim 10, wherein step d) comprises defining a laser scan path following a meander scan strategy, wherein neighboring vectors of the laser scan path are scanned with a constant hatching distance in the opposite direction over the entire metallic glass powder layer deposited on the build platform (5).

12. The method according to claim 11, wherein in step d) a laser scan path of meander type with a rotation of the laser scan direction between 60-90° after each deposited metallic glass powder layer on the build platform (5) is defined.

13. The method according to any of claims 2-12, wherein steps f) to h) are performed using a thermo-metallurgical model.

14. The method according to any of claims 2-13, wherein step i) comprises performing an optimization of the LPBF process parameters using a training model according to a machine learning or an artificial intelligence algorithm, wherein the training model comprises a dataset including a combination of LPBF processing parameters, 3D object's (1) shapes and sizes, and resulting crystalline fraction.

15. A computer program comprising instructions which, when executed in the control unit (8) of a LPBF device according to claim 1, enables performing:
- steps b) to h) of a method according to any of claims 2 to 13; or
- steps b) to i) of a method according to claim 14.
